# EUROPEAN PATENT APPLICATION

(11) **EP 4 789 890 A1**
(43) Date of publication of application: **12.08.2026**
(21) Application number: 24877405.1
(22) Date of filing: 30.08.2024
(51) Int. Cl.: B60K 35/00, B60W 50/14, B60Q 1/50, B60L 53/16, B60N 3/18, B60K 35/28, B60K 35/22

(54) **VEHICLE DISPLAY DEVICE**

(30) Priority: 10.10.2023 KR 20230134593
(71) Applicant: LG Electronics Inc., Yeongdeungpo-gu Seoul 07336 (KR)
(72) Inventor: CHO, Sungil, Seoul 06772 (KR); HWANG, Inyoung, Seoul 06772 (KR); LEE, Kyoungha, Seoul 06772 (KR)
(74) Representative: Vossius & Partner Patentanwälte Rechtsanwälte mbB
(86) International application number: PCT/KR2024/013060
(87) International publication number: WO 2025/079866

(57) **Abstract**

A vehicle display device is disclosed. The vehicle display device according to an embodiment of the present invention comprises: a display unit that includes a first display module and a second display module of different types, one from among the first and second display modules being positioned in front of the other so as to overlap; a vertical driving unit for vertically moving at least one from among the first and second display modules; and a processor electrically coupled to the display modules so as to control driving of the first and second display modules and an operation of the vertical driving unit. The processor controls, on the basis of a positional change corresponding to movement of at least one of the first and second display modules according to an operation of the vertical driving unit, that the display unit operates in any one from among a plurality of different display modes. Therefore, various display modes can be executed while maintaining a full screen in a limited space.

## Description

### Technical Field

The disclosure relates to a vehicle display device, and more particularly, to a vehicle display device configured to drive various a plurality of display modes according to movement of a plurality of display modules.

### Background Art

A vehicle is a device configured to move in a direction desired by a user riding therein. A representative example may be an automobile.

Meanwhile, for convenience of users of vehicles, various sensors and electronic devices are increasingly being included in the vehicles. In particular, research on advanced driver assistance systems (ADAS) is being briskly conducted to enhance driving convenience for users. In addition, autonomous vehicles are being actively developed.

Autonomous driving (automatic driving) of a vehicle refers to a system such that the vehicle may make own decisions and drive. The autonomous driving may be classified into gradual stages ranging from non-automation to full automation, depending on a degree to which the system is involved in driving and an extent to which a driver controls the vehicle.

The autonomous driving of a vehicle has transformed perception of the vehicle from mere means of transportation into a space for staying therein. In addition, it has become a trend to equip large-screen displays in the vehicle to freely enjoy various infotainment content according to the autonomous driving of the vehicle. Further, research and development are being conducted to provide a wide variety of usage environments during use of the displays.

### Disclosure of Invention

### Technical Problem

This disclosure is directed to solving the aforementioned problems and other drawbacks.

According to some embodiments of this disclosure, an objective is to provide a vehicle display device capable of executing various display modes using different types of display modules.

In addition, according to some embodiments of this disclosure, an objective is to provide a vehicle display device configured to maintain a large screen and provide different display modes through relative movement of a plurality of displays, thereby providing diverse user environment experiences.

### Solution to Problem

To achieve these and other advantages and in accordance with the purpose of the disclosure, as embodied and broadly described herein, there is provided a vehicle display device according to an embodiment of this disclosure, the vehicle display device being configured such that different display modules are arranged to overlap each other and move relative to each other, thereby allowing a plurality of different display modes to be selectively executed.

In detail, the vehicle display device according to an embodiment of this disclosure includes: a display unit including a first display module and a second display module of different types, wherein one display module from among the first and second display modules is positioned in front of another display module to be arranged to overlap each other; a vertical driving unit configured to vertically move at least one display module from among the first and second display modules; and a processor electrically coupled to the display unit and the vertical driving unit to control driving of the first and second display modules and an operation of the vertical driving unit. At this time, the processor may control the display unit to operate in one of a plurality of different display modes based on position change corresponding to movement of at least one display module from among the first and second display modules according to the operation of the vertical driving unit.

In an embodiment, the first display module may be an organic light-emitting diode (OLED) display and the second display module may be a transparent organic light-emitting diode (TOLED) display.

In an embodiment, the processor may control the operation of the vertical driving unit to vary a degree of movement of at least one display module from among the first and second display modules is changed based on a selected display mode.

In an embodiment, the vertical driving unit may include a first drive module configured to vertically move the first display module and a second drive module configured to vertically move the second display module, and the processor may vary a degree of movement of the first and second display modules by driving either or both of the first and second drive modules, based on the selected display mode.

In an embodiment, the processor may control the display unit to execute different display modes depending on a degree of overlapping between the first and second display modules in correspondence with the position change.

In an embodiment, the processor may control a display mode for displaying three-dimensional (3D) content to be executed based on arrangement of the first and second display modules to fully overlap each other according to the operation of the vertical driving unit.

In an embodiment, in the display mode for displaying the 3D content, a depth of the 3D content may vary depending on a distance between the first and second display modules.

In an embodiment, the processor may control a display mode for displaying an augmented reality (AR) graphic to be executed based on arrangement of the first and second display modules such that portions of the first and second display modules overlap each other according to the operation of the vertical driving unit.

In an embodiment, the processor may be configured to, in the display mode for displaying the AR graphic, execute a same application in a first region in which the first and second display modules overlap each other and a second region in which the first and second display modules do not overlap each other, and control the display to display different information in the first region and the second region, respectively.

In an embodiment, in a state when one display module from among the first and second display modules is fixed, the processor may control the display to display the AR graphic is displayed on a region of another display module that has vertically moved according to the operation of the vertical driving unit.

In an embodiment, the processor may control a full extension display mode to be executed by causing the vertical driving unit to move at least one display module from among the first and second display modules upward or move another display module downward to prevent the first and second display modules from overlapping each other, and the full extension display mode may be either an organic light-emitting diode (OLED) display mode or a transparent organic light-emitting diode (TOLED) display.

In an embodiment, the vehicle display device may further include a communication module configured to receive traveling state information of a vehicle, and the processor may determine one of the plurality of different display modes based on the received traveling state information, and according to the determination, control the operation of the vertical driving unit to move at least one display module from among the first and second display modules upward or downward.

In an embodiment, the processor may determine whether the plurality of different display modes vary depending on an attribute of content to be displayed on the display unit and, according to the determination, and control the operation of the vertical driving unit to move at least one display module from among the first and second display modules upward or downward.

### Advantageous Effects of Invention

According to a vehicle display device in accordance with an embodiment of this disclosure, various different display modes may be executed within a limited space by implementing a plurality of display modules of different types to include a transparent display and to be movable relative to each other.

In addition, according to the vehicle display device in accordance with an embodiment of this disclosure, an appropriate display mode may be selectively executed depending on a driving state of a vehicle or a type of content to be displayed. Accordingly, diverse visual experiences may be provided to users.

### Brief Description of Drawings

FIG. 1 is an example block diagram for explaining a configuration of a vehicle related to this disclosure.
FIG. 2 is a block diagram illustrating an example of a detailed configuration of a vehicle display device according to this disclosure.
FIG. 3 is a diagram illustrating an example in which the vehicle display device according to this disclosure is installed in front seats of the vehicle to operate.
FIGS. 4 to 7 are diagrams for explaining various examples of executing different display modes in accordance with vertical movements of a plurality of display modules, according to this disclosure.
FIG. 8 is an example flowchart related to a method of operations of the vehicle display device according to an embodiment of this disclosure.

### Mode for the Invention

A description will now be given in detail according to embodiments disclosed herein, with reference to the accompanying drawings. For the sake of a brief description with reference to the drawings, the same or equivalent components may be provided with the same reference numbers, and the description thereof will not be repeated. Suffixes "module" and "unit" used for components used in the following description are merely intended for easy description of the specification, and each suffix itself is not intended to give any special meaning or function. In describing the embodiments disclosed herein, moreover, the detailed description will be omitted when specific description for publicly known technologies to which this specification pertains is judged to obscure the gist of this disclosure. The accompanying drawings are used to help easily understand the technical idea of this disclosure and it should be understood that the idea of this disclosure is not limited by the accompanying drawings. The idea of this disclosure should be construed to extend to any alterations, equivalents and substitutes besides the accompanying drawings.

It will be understood that although the terms first, second, etc. may be used herein to describe various elements, these elements should not be limited by these terms. These terms are generally only used to distinguish one element from another.

It will be understood that when an element is referred to as being "connected" or "coupled" to another element, the element may be directly connected or coupled to the another element, or intervening elements may also be present. In contrast, when an element is referred to as being "directly connected with" or "directly coupled to" another element, there are no intervening elements present.

A singular representation may include a plural representation unless it represents a definitely different meaning from the context.

Terms such as "include" or "has" as used herein should be understood that they are intended to indicate the existence of a feature, a number, a step, an element, a component, or a combination thereof disclosed in this specification, and it may also be understood that a possibility of presence or addition of one or more other features, numbers, steps, elements, components, or combinations thereof are not excluded in advance.

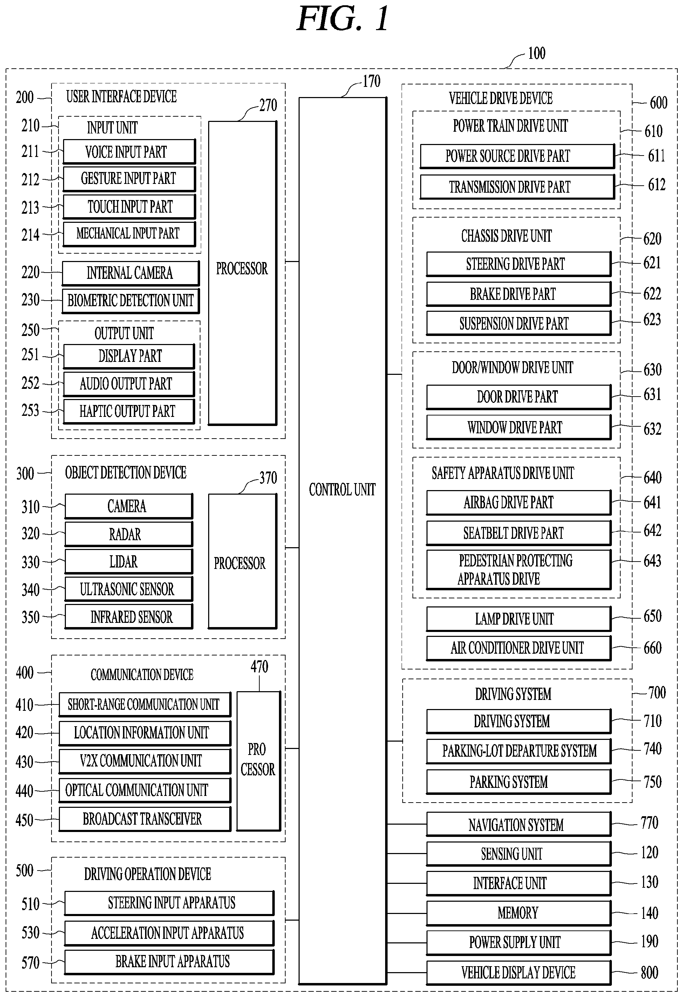

FIG. 1 is an example block diagram for explaining a vehicle related to this disclosure and a configuration of the vehicle.

Referring to FIG. 1, a vehicle 100 may include a wheel rotated by a power source and a steering input apparatus 510 configured to control a traveling direction of the vehicle 100.

The vehicle 100 may be an autonomous vehicle. The vehicle 100 may be switched into an autonomous mode or a manual mode based on a user input. For example, the vehicle 100 may be converted from the manual mode into the autonomous mode or from the autonomous mode into the manual mode based on a user input received through a user interface device (which may be hereinafter referred to as a 'user terminal') 200.

The vehicle 100 may be switched into the autonomous mode or the manual mode based on traveling situation information. The traveling situation information may be generated based on object information provided by an object detection device 300. For example, the vehicle 100 may be switched from the manual mode into the autonomous mode or from the autonomous mode into the manual mode based on traveling situation information generated from the object detection device 300. For example, the vehicle 100 may be switched from the manual mode into the autonomous mode or from the autonomous mode into the manual mode based on traveling situation information received through a communication device 400.

The vehicle 100 may be switched from the manual mode into the autonomous mode or from the autonomous mode into the manual mode based on information, data or a signal provided from an external device.

When the vehicle 100 is driven in the autonomous mode, the vehicle 100 may be driven based on a driving system 700. For example, the autonomous vehicle 100 may be driven based on information, data or a signal each generated in a traveling system 710, a parking-lot departure system 740, and a parking system 750.

When the vehicle 100 is driven in the manual mode, the autonomous vehicle 100 may receive a user input for driving through a driving operation device 500. The vehicle 100 may be driven based on the user input received through the driving operation device 500.

The vehicle 100 may include the user interface device 200, the object detection device 300, the communication device 400, the driving operation device 500, a vehicle drive device 600, the driving system 700, a navigation system 770, a sensing unit 120, a vehicle interface unit 130, a memory 140, a controller 170, and/or a power supply unit 190.

According to an embodiment, the vehicle 100 may further include components in addition to components described in this specification or may not include some of those components described in this specification.

The user interface device 200 is a device for communication between the vehicle 100 and a user. The user interface device 200 may receive a user input and provide information generated by the vehicle 100 to the user. The vehicle 100 may implement a user interface (UI) or a user experience (UX) through the user interface device (which may be hereinafter referred to as a 'user terminal') 200.

The user interface device 200 may include an input part 210, an internal camera 220, a biometric detection unit 230, an output part 250 and a processor 270. According to an embodiment, the user interface device 200 may further include other components in addition to the components described herein, or may not include some of the components described herein.

The input part 210 is configured to receive information from the user, and data collected from the input part 210 may be analyzed by the processor 270, and then, processed by a control command by the user.

The input part 210 may be arranged inside the vehicle. For example, the input part 210 may be arranged in one region of a steering wheel, one region of an instrument panel, one region of a seat, one region of each pillar, one region of a door, one region of a center console, one region of a head lining, one region of a sun visor, one region of a windshield, one region of a window, or the like.

The input part 210 may include a voice input part 211, a gesture input part 212, a touch input part 213, and a mechanical input part 214.

The voice input part 211 may convert a voice input of the user into an electrical signal. The electrical signal, obtained by the converting, may be provided to the processor 270 or the controller 170. The voice input part 211 may include one or more microphones.

The gesture input part 212 may convert a gesture input of the user into an electrical signal. The electrical signal, obtained by the converting, may be provided to the processor 270 or the controller 170.

The gesture input part 212 may include at least one from among an infrared sensor and an image sensor each configured to detect the gesture input of the user. According to an embodiment, the gesture input part 212 may detect a three-dimensional (3D) gesture input of the user. Thus, the gesture input part 212 may include a light output part configured to output a plurality of pieces of infrared light or a plurality of image sensors.

The gesture input part 212 may detect a 3D gesture input of the user through a time of flight (TOF) method, a structured light method, or a disparity method.

The touch input part 213 may convert a touch input of the user into an electrical signal. The electrical signal, obtained by the converting, may be provided to the processor 270 or the controller 170.

The touch input part 213 may include a touch sensor configured to detect a touch input of the user. According to an embodiment, the touch input part 213 may be arranged integrally with a display unit 251 to implement a touch screen. Such a touch screen may provide an input interface and an output interface between the vehicle 100 and the user together.

The mechanical input part 214 may include at least one from among a button, a dome switch, a jog wheel, and a jog switch. An electrical signal generated by the mechanical input part 214 may be provided to the processor 270 or the controller 170. The mechanical input part 214 may be arranged in a steering wheel, a center fascia, a center console, a cockpit module, a door, etc.

The internal camera 220 may obtain an image of an interior of the vehicle. The processor 270 may detect a state of the user based on the image of the interior of the vehicle. The processor 270 may obtain gaze information of the user from the image of the interior of the vehicle. The processor 270 may detect the user's gesture from the image of the interior of the vehicle.

The biometric detection unit 230 may acquire biometric information of the user. The biometric detection unit 230 may include a sensor configured to acquire the biometric information of the user, and acquire fingerprint information and heart rate information of the user using the sensor. The biometric information may be used for user authentication.

The output part 250 is configured to generate output related to sight, hearing, or touch. The output part 250 may include at least one from among a display unit, an audio output part 252, and a haptic output part 253.

The display unit may output graphic objects corresponding to various types of information. The display unit may include at least one from among a liquid crystal display (LCD), a thin film transistor-liquid crystal display (TFT-LCD), an organic light emitting diode (OLED), a flexible display, a three-dimensional (3D) display, and an e-ink display.

The display unit may constitute an inter-layered structure with the touch input part 213 or be arranged integrally therewith to implement a touch screen.

The display unit may be implemented as a head up display (HUD). When the display unit is implemented as the HUD, the display unit may include a projecting module to output information through an image projected on the windshield or the window.

The display unit may include a transparent display. The transparent display may be attached to the windshield or the window. The transparent display may have a predetermined degree of transparency and display a predetermined screen thereon. To have transparency, the transparent display may include at least one from among a transparent thin film electroluminescent (TFEL) display, a transparent organic light-emitting diode (OLED), a transparent liquid crystal display (LCD), a transmissive transparent display, and a transparent light-emitting diode (LED) display. The transparent display may have adjustable transparency.

Meanwhile, the user interface device 200 may include a plurality of display units. In this case, the plurality of display units may be located in various regions within the vehicle.

The audio output part 252 converts an electrical signal provided from the processor 270 or the controller 170 into an audio signal and outputs the audio signal. Thus, the audio output part 252 may include one or more speakers.

The haptic output part 253 generates a tactile output. For example, the haptic output part 253 may operate to vibrate the steering wheel, a safety belt, or a seat to allow the user to recognize an output.

The processor (which may be hereinafter referred to as a 'controller') 270 may control overall operations of respective units of the user interface device 200. That is, the user interface device 200 may operate according to control by the controller 170.

According to an embodiment, the user interface device 200 may include a plurality of processors 270 or may not include any processor 270.

When the processor 270 is not included in the user interface device 200, the user interface device 200 may operate according to a control by a processor of another device within the vehicle 100 or the controller 170.

The object detection device 300 is a device configured to detect objects located outside the vehicle 100. The objects may be various entities relevant to driving of the vehicle 100. For example, the objects may include lanes, other vehicles, pedestrians, motorcycles, traffic signals, light, roads, structures, speed bumps, terrain features, animals, etc.

Meanwhile, the objects may be classified into moving objects and fixed objects. For example, the moving objects may be a concept including other vehicles and pedestrians. For example, the fixed objects may be a concept including traffic signals, roads, and structures.

The object detection device 300 may include a camera 310, a radar 320, a LiDAR 330, an ultrasonic sensor 340, an infrared sensor 350, and a processor 370.

In an embodiment, the object detection device 300 may further include other components in addition to the components described herein, or may not include some of the components described herein.

The camera 310 may be positioned at an appropriate location outside the vehicle to obtain an image of outside of the vehicle. The camera 310 may be a mono camera, a stereo camera 310a, an around view monitoring (AVM) camera 310b, or a 360-degree camera.

For example, the camera 310 may be arranged in an interior of the vehicle to be close to a front windshield to obtain an image of a region in front of the vehicle. Alternatively, the camera 310 may be arranged near a front bumper or a radiator grill.

For example, the camera 310 may be positioned inside the vehicle to be close to rear glass to obtain an image of a region behind the vehicle. Alternatively, the camera 310 may be arranged near a rear bumper, a trunk, or a tailgate.

For example, the camera 310 may be arranged inside the vehicle to be close to at least one of side windows to obtain an image of a region at a side of the vehicle. Alternatively, the camera 310 may be arranged near a side mirror, a fender, or a door.

The camera 310 may capture the obtained image to the processor 370.

The radar 320 may include an electromagnetic wave transmission part and an electromagnetic wave reception part. The radar 320 may be implemented as a pulse radar scheme or a continuous wave radar scheme based on a principle of radio wave emission. Among the continuous wave radar scheme, the radar 320 may be implemented as a frequency modulated continuous wave (FMCW) scheme or a frequency shift keying (FSK) scheme according to a signal waveform.

The radar 320 may detect an object using electromagnetic waves as a medium based on the time of flight (TOF) method or a phase-shift method, and detect a location of the detected object, a distance from the detected object, and a relative speed with respect to the detected object.

The radar 320 may be arranged at an appropriate position on an exterior of the vehicle to detect an object located in front of, behind, or at a side of the vehicle.

The LiDAR 330 may include a laser transmission part and a laser reception part. The LiDAR 330 may be implemented using the time of flight (TOF) method or the phase-shift method.

The LiDAR 330 may be implemented as a drive type or a non-drive type.

When implemented as the drive type, the LiDAR 330 may be rotated by a motor and detect objects near the vehicle 100.

When implemented as the non-drive type, the LiDAR 330 may detect, using light steering, an object located within a predetermined range with respect to the vehicle 100. The vehicle 100 may include a plurality of non-drive type LiDARs 330.

The LiDAR 330 may detect an object using laser light as a medium based on the time of flight (TOF) method or the phase-shift method, and detect a position of the detected object, and a distance from the detected object, and a relative speed with respect to the detected object.

The LiDAR 330 may be arranged at an appropriate position on the exterior of the vehicle to detect an object located in front of, behind, or at a side of the vehicle.

The ultrasonic sensor 340 may include an ultrasonic transmission part and an ultrasonic reception part. The ultrasonic sensor 340 may detect an object based on an ultrasonic wave, and detect a position of the detected object, and a distance from the detected object, and a relative speed with respect to the detected object.

The ultrasonic sensor 340 may be arranged at an appropriate position on the exterior of the vehicle to detect an object located in front of, behind, or at a side of the vehicle.

The infrared sensor 350 may include an infrared transmission part and an infrared reception part. The infrared sensor 340 may detect an object based on infrared light, and detect a location of the detected object, a distance from the detected object, and a relative speed with the detected object.

The infrared sensor 350 may be arranged at an appropriate position on the exterior of the vehicle to detect an object located in front of, behind, or at a side of the vehicle.

The processor 370 may control overall operations of respective units of the object detection device 300.

The processor 370 may detect and track an object based on an obtained image. The processor 370 may perform operations such as calculation of a distance from the object, calculation of a relative speed with respect to the object, and the like, through an image processing algorithm.

The processor 370 may detect and track an object based on a reflected electromagnetic wave obtained as an electromagnetic wave is transmitted, and then, reflected back from the object. The processor 370 may perform operations such as calculation of a distance from the object, calculation of a relative speed with respect to the object, and the like based on the electromagnetic wave.

The processor 370 may detect and track an object based on reflected laser light obtained as laser light is transmitted, and then, reflected back from the object. The processor 370 may perform operations such as calculation of a distance from the object, calculation of a relative speed with respect to the object, and the like based on the laser light.

The processor 370 may detect and track an object based on a reflected ultrasonic wave obtained as an ultrasonic wave is transmitted, and then, reflected back from the object. The processor 370 may perform operations such as calculation of a distance from the object, calculation of a relative speed with respect to the object, and the like based on the ultrasonic wave.

The processor 370 may detect and track an object based on reflected infrared light obtained as infrared light is transmitted, and then, reflected back from the object. The processor 370 may perform operations such as calculation of a distance from the object, calculation of a relative speed with respect to the object, and the like based on the infrared light.

According to an embodiment, the object detection device 300 may include a plurality of processors 370 or may not include any processor 370. For example, the camera 310, the radar 320, the LiDAR 330, the ultrasonic sensor 340, and the infrared sensor 350 may respectively include a processor.

When the processor 370 is not included in the object detection device 300, the object detection device 300 may operate according to control by a processor of a device inside the vehicle 100, or the controller 170.

The object detection device 400 may operate according to the control of by the controller 170.

The communication device 400 is a device configured to perform communication with an external device. Here, the external device may be another vehicle, a mobile terminal, or a server.

To perform the communication, the communication device 400 may include at least one from among a transmitting antenna, a receiving antenna, a radio frequency (RF) circuit, and an RF device, the RF circuit and the RF device each being capable of implementing various communication protocols.

The communication device 400 may include a short-range communication unit 410, a location information unit 420, a vehicle-to-everything (V2X) communication unit 430, an optical communication unit 440, a broadcast transceiver 450, and a processor 470.

According to an embodiment, the communication device 400 may further include other components in addition to the components described herein, or may not include some of the components described herein.

The short-range communication unit 410 is a unit configured to perform short-range communications. The short-range communication unit 410 may support short-range communication using at least one from among Bluetooth^{™}, radio frequency identification (RFID), infrared data association (IrDA), ultra wideband (UWB), ZigBee, near field communication (NFC), wireless-fidelity (Wi-Fi), Wi-Fi Direct, and wireless universal serial bus (USB) technologies.

The short-range communication unit 410 may establish short-range wireless area networks to perform short-range communication between the vehicle 100 and at least one external device.

The location information unit 420 may be a unit configured to acquire location information of the vehicle 100. For example, the location information unit 420 may include a global positioning system (GPS) module or a differential global positioning system (DGPS) module.

The V2X communication unit 430 is a unit configured to perform wireless communications with a server (vehicle to infrastructure (V2I)), another vehicle (vehicle to vehicle (V2V)), or a pedestrian (vehicle to pedestrian (V2P)). The V2X communication unit 430 may include an RF circuit capable of implementing protocols for communication with an infrastructure (V2I), communication between vehicles (V2V), and communication with a pedestrian (V2P).

The optical communication unit 440 is a unit configured to perform communication with an external device using light as a medium. The optical communication unit 440 may include an optical transmission part configured to convert an electric signal into an optical signal to transmit the optical signal to outside, and an optical reception part configured to convert a received optical signal into an electric signal.

According to an embodiment, the optical transmission part may be arranged integrally with a lamp included in the vehicle 100.

The broadcast transceiver 450 is a unit configured to, via a broadcast channel, receive a broadcast signal from an external broadcast managing server or transmit a broadcast signal to the broadcast managing server. The broadcast channel may include a satellite channel and a terrestrial channel. The broadcast signal may include a TV broadcast signal, a radio broadcast signal, or a data broadcast signal.

The processor 470 may control overall operations of respective units of the communication device 400.

According to an embodiment, the communication device 400 may include a plurality of processors 470 or may not include any processor 470.

When the processor 470 is not included in the communication device 400, the communication device 400 may operate according to control by a processor of another device within the vehicle 100 or the controller 170.

Meanwhile, the communication device 400 may implement a display device for the vehicle together with the user interface device 200. In this case, the display device for the vehicle may be referred to as a telematics device or an audio video navigation (AVN) device.

The communication device 400 may operate according to control by the controller 170.

The driving operation device 500 is a device configured to receive a user input for driving.

In the manual mode, the vehicle 100 may be operated based on a signal provided by the driving operation device 500.

The driving operation device 500 may include the steering input apparatus 510, an acceleration input apparatus 530 and a brake input apparatus 570.

The steering input apparatus 510 may receive an input of a traveling direction of the vehicle 100 from the user. The steering input apparatus 510 may preferably have a form of a wheel to allow an input of steering by rotation. According to an embodiment, the steering input apparatus may have a form of a touch screen, a touch pad or a button.

The acceleration input apparatus 530 may receive, from the user, an input for accelerating the vehicle 100. The brake input apparatus 570 may, from the user, receive an input for deceleration of the vehicle 100. The acceleration input apparatus 530 and the brake input apparatus 570 may preferably have a form of pedals. According to an embodiment, the acceleration input apparatus and the brake input apparatus may also have a form of a touch screen, a touch pad or a button.

The driving operation device 500 may operate according to control by the controller 170.

The vehicle drive device 600 is a device configured to electrically control operations of various devices inside the vehicle 100.

The vehicle drive device 600 may include a power train drive unit 610, a chassis drive unit 620, a door/window drive unit 630, a safety apparatus drive unit 640, a lamp drive unit 650, and an air-conditioner drive unit 660.

According to an embodiment, the vehicle drive device 600 may further include other components in addition to the components described herein, or may not include some of the components described herein.

Meanwhile, the vehicle drive device 600 may include a processor. Respective units of the vehicle drive device 600 may individually include a processor.

The power train drive unit 610 may control an operation of a power train device.

The power train drive unit 610 may include a power source drive part 611 and a transmission drive part 612.

The power source drive part 611 may control a power source of the vehicle 100.

For example, when an engine based on fossil fuel is the power source, the power source drive part 610 may perform an electronic control on the engine. Based on this, an output torque, and the like of the engine may be controlled. The power source drive part 611 may adjust an engine output torque according to control by the controller 170.

For example, when a motor based on electric energy is the power source, the power source drive part 610 may perform an electronic control on the motor. The power source drive part 610 may adjust a rotation speed, a torque, etc. of the motor according to control by the controller 170.

The transmission drive part 612 may control a transmission. The transmission drive part 612 may adjust a state of the transmission. The transmission drive part 612 may adjust a state of the transmission to forward (D), reverse (R), neutral (N), or parking (P).

Meanwhile, when an engine is the power source, the transmission drive part 612 may adjust an engaged state of a gear in a state of drive (D).

The chassis drive unit 620 may control an operation of a chassis device. The chassis drive unit 620 may include a steering drive part 621, a brake drive part 622, and a suspension drive part 623.

The steering drive part 621 may perform electronic control on a steering apparatus inside the vehicle 100. The steering drive part 621 may change a traveling direction of the vehicle.

The brake drive part 622 may perform electronic control on a brake apparatus inside the vehicle 100. For example, a speed of the vehicle 100 may be reduced by controlling operations of brakes arranged on wheels.

Meanwhile, the brake drive part 622 may control a plurality of the brakes individually. The brake drive part 622 may control braking force applied to a plurality of the wheels differently.

The suspension drive part 623 may perform electronic control on a suspension apparatus in the vehicle 100. For example, when irregularities are present on a road surface, the suspension drive part 623 may control the suspension apparatus to reduce vibration of the vehicle 100. Meanwhile, the suspension drive part 623 may control each of a plurality of suspensions individually.

The door/window drive unit 630 may perform electronic control on a door apparatus or a window apparatus within the vehicle 100.

The door/window drive unit 630 may include a door drive part 631 and a window drive part 632.

The door drive part 631 may perform control on the door apparatus. The door drive part 631 may control opening or closing of a plurality of doors included in the vehicle 100. The door drive part 631 may control opening or closing of the trunk or the tailgate. The door drive part 631 may control opening or closing of a sunroof.

The window drive part 632 may perform electronic control on the window apparatus. Opening or closing of a plurality of windows included in the vehicle 100 may be controlled.

The safety apparatus drive part 640 may perform electronic control on various safety apparatuses within the vehicle 100.

The safety apparatus drive part 640 may include an airbag drive part 641, a seatbelt drive part 642, and a pedestrian protection apparatus drive part 643.

The airbag drive part 641 may perform electronic control on an airbag apparatus in the vehicle 100. For example, when danger is detected, the airbag drive part 641 may control an airbag to be deployed.

The seatbelt drive part 642 may perform electronic control on a seatbelt apparatus in the vehicle 100. For example, when danger is detected, the seatbelt drive part 642 may control passengers secured to seats 110FL, 110FR, 110RL, and 110RR using a seat belt.

The pedestrian protection apparatus drive part 643 may perform electronic control on hood lifting and a pedestrian airbag. For example, when collision with a pedestrian is detected, the pedestrian protection apparatus drive part 643 may control a hood to be lifted up and the pedestrian airbag to be deployed.

The lamp drive part 650 may perform electronic control on various lamp apparatuses within the vehicle 100.

The air-conditioner drive unit 660 may perform electronic control on an air conditioner in the vehicle 100. For example, when a temperature inside the vehicle is high, the air-conditioner drive unit 660 may control the air conditioner to operate to supply cold air into the vehicle.

The vehicle drive device 600 may include a processor. Respective units of the vehicle drive device 600 may individually include a processor.

The vehicle drive device 600 may operate according to control by the controller 170.

The driving system 700 may be a system configured to control various types of driving of the vehicle 100. The driving system 700 may be operated in the autonomous mode.

The driving system 700 may include the traveling system 710, the parking-lot departure system 740, and the parking system 750.

According to an embodiment, the driving system 700 may further include other components in addition to the components described herein, or may not include some of the components described herein.

Meanwhile, the driving system 700 may include a processor. Respective units of the driving system 700 may individually include a processor.

Meanwhile, according to an embodiment, when implemented as a software configuration, the driving system 700 may be a sub-concept of the controller 170.

Meanwhile, according to an embodiment, the driving system 700 may be a concept of including at least one from among the user interface device 200, the object detection device 300, the communication device 400, the vehicle drive device 600, and the controller 170.

The traveling system 710 may perform traveling of the vehicle 100.

The traveling system 710 may receive navigation information from the navigation system 770, provide a control signal to the vehicle drive device 600, and perform traveling of the vehicle 100. The traveling system 710 may receive object information from the object detection device 300, provide a control signal to the vehicle drive device 600, and perform traveling of the vehicle 100. The traveling system 710 may receive a signal from an external device through the communication device 400, provide a control signal to the vehicle drive device 600, and perform traveling of the vehicle 100.

The parking-lot departure system 740 may perform parking-lot departure of the vehicle 100.

The parking-lot departure system 740 may receive navigation information from the navigation system 770, provide a control signal to the vehicle drive device 600, and perform parking-lot departure of the vehicle 100. The parking-lot departure system 740 may receive object information from the object detection device 300, provide a control signal to the vehicle drive device 600, and perform parking-lot departure of the vehicle 100. The parking-lot departure system 740 may receive a signal from an external device through the communication device 400, provide a control signal to the vehicle drive device 600, and perform parking-lot departure of the vehicle 100.

The parking system 750 may perform parking of the vehicle 100.

The parking system 750 may receive navigation information from the navigation system 770, provide a control signal to the vehicle drive device 600, and perform parking of the vehicle 100. The parking system 750 may receive object information from the object detection device 300, provide a control signal to the vehicle drive device 600, and perform parking of the vehicle 100. The parking system 750 may receive a signal from an external device through the communication device 400, provide a control signal to the vehicle drive device 600, and perform parking of the vehicle 100.

The navigation system 770 may provide navigation information. The navigation information may include at least one from among map information, information about a set destination, information about a route according to the set destination, information about various objects on the route, lane information, and current location information of the vehicle.

The navigation system 770 may include a memory and a processor. The memory may store the navigation information. The processor may control operation of the navigation system 770.

According to an embodiment, the navigation system 770 may receive information from an external device through the communication device 400, and update previously stored information.

According to an embodiment, the navigation system 770 may be classified as a sub-component of the user interface device 200.

The sensing unit 120 may sense a state of the vehicle. The sensing unit 120 may include an attitude sensor (e.g., a yaw sensor, a roll sensor, or a pitch sensor), a collision sensor, a wheel sensor, a speed sensor, an inclination sensor, a weight sensing sensor, a heading sensor, a yaw sensor, a gyro sensor, a position module, a vehicle forward/reverse sensor, a battery sensor, a fuel sensor, a tire sensor, a steering sensor based on steering wheel rotation, a vehicle interior temperature sensor, a vehicle interior humidity sensor, an ultrasonic sensor, an illuminance sensor, an accelerator pedal position sensor, a brake pedal position sensor, etc.

The sensing unit 120 may acquire sensing signals regarding vehicle attitude information, vehicle collision information, vehicle direction information, vehicle position information (GPS information), vehicle angle information, vehicle speed information, vehicle acceleration information, vehicle inclination information, vehicle forward/reverse information, battery information, fuel information, tire information, vehicle lamp information, vehicle interior temperature information, vehicle interior humidity information, a steering wheel rotation angle, vehicle exterior illumination, pressure applied to an accelerator pedal, pressure applied to a brake pedal, etc.

In addition, the sensing unit 120 may further include an accelerator pedal sensor, a pressure sensor, an engine speed sensor, an air flow sensor (AFS), an intake air temperature sensor (ATS), a water temperature sensor (WTS), a throttle position sensor (TPS), a top dead center (TDC) sensor, a crank angle sensor (CAS), etc.

The vehicle interface unit 130 may function as an interface with various types of external devices connected to the vehicle 100. For example, the vehicle interface unit 130 may have a port connectible to a mobile terminal, and may be connected to the mobile terminal through the port. In this case, the vehicle interface unit 130 may exchange data with the mobile terminal.

Meanwhile, the vehicle interface unit 130 may function as a path for supplying electric energy to a connected mobile terminal. When the mobile terminal is electrically connected to the vehicle interface unit 130, the vehicle interface unit 130 may provide electrical energy, having been supplied from the power supply unit 190, to the mobile terminal according to control by the controller 170.

The memory 140 is electrically connected to the controller 170. The memory 140 may store basic data for a unit, control data for controlling operation of the unit, and input/output data. The memory 140 may be, as hardware, a variety of storage devices such as a read-only memory (ROM), a random access memory (RAM), an erasable programmable read-only memory (EPROM), a flash drive, a hard drive, etc. The memory 140 may store various data for overall operation of the vehicle 100, such as a program for processing or controlling the controller 170.

According to an embodiment, the memory 140 may be arranged integrally with the controller 170 or implemented as a sub-component of the controller 170.

The controller 170 may control overall operations of respective units within the vehicle 100. The controller 170 may be referred to as an electronic control unit (ECU).

The power supply unit 190 may supply power needed for operations of respective components according to control by the controller 170. In particular, the power supply unit 190 may receive power from a battery inside the vehicle, etc.

One or more processors and controllers 170 each included in the vehicle 100 may be implemented using at least one from among application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, and electrical units configured to perform other functions.

Meanwhile, the vehicle 100 may include a vehicle display device 800 having a rectangular shape to correspond to a driver's seat and a passenger seat, separately from a head-up display (HUD). The vehicle display device 800 may include a plurality of display modules. As the plurality of display modules vertically move relative to each other, a plurality of different display modes may be implemented on a single large screen.

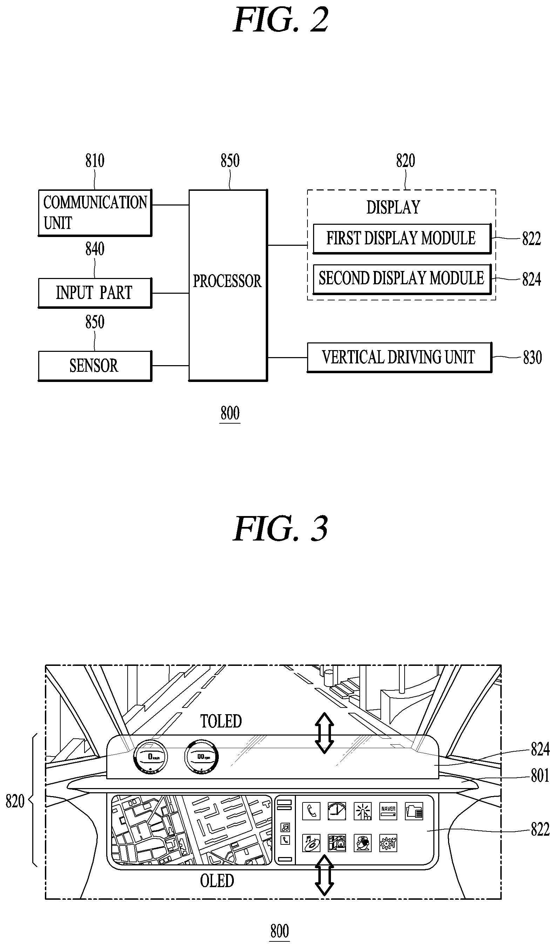

FIG. 2 is a block diagram illustrating an example of a detailed configuration of the vehicle display device 800 according to this disclosure.

The vehicle display device 800 may include a display 820 including a plurality of display modules, a vertical driving unit 830 configured to vertically move the display 820, a communication unit 810, an input part 840, a sensor 850, and a processor 850.

The vehicle display device 800 may be installed in front of a front window of the vehicle 100. Additionally, the vehicle display device 800 is communicatively connected to the vehicle 100 through the communication unit 810, and may operate by receiving power from the vehicle 100.

The communication unit 810 enables the vehicle display device 800 to be communicatively connected to the vehicle 100 through a wired/wireless communication method. Information/data regarding a state of the vehicle, a traveling state, and a state of passengers is received by the vehicle display device 800 through the communication unit 810. Additionally, the communication unit 810 may transmit, to the vehicle 100, data regarding an operating state of the display 820 and content displayed thereon.

The display 820 includes a first display module 822 and a second display module 824 which are different types from each other. In an embodiment, one of the first and second display modules 822 and 824 may include a transparent organic light-emitting diode (TOLED). In an embodiment, the first display module 822 may be an organic light-emitting diode (OLED) display, and the second display module 824 may be a transparent organic light-emitting diode (TOLED) display.

The first and second display modules 822 and 824 of the display 820 may be arranged so that one display module is positioned in front of another display module to overlap each other. Also, at least one display module of the first and second display modules 822 and 824 may move vertically relative to another display module. Accordingly, the first and second display modules 822 and 824 may or may not include regions of overlapping therebetween.

In an embodiment, the first and second display modules 822 and 824 of the display 820 operate in different display modes depending on whether a region of overlapping therebetween is included or not.

In an embodiment, when portions of the first and second display modules 822 and 824 overlap each other, the first and second display modules 822 and 824 may operate in different display modes depending on a degree of the overlapping. In an embodiment, when the first and second display modules 822 and 824 do not overlap each other, the first and second display modules 822 and 824 may be displayed on different screens, depending on a display module positioned within a forward field of view of an occupant among the first and second display modules 822 and 824.

The vertical driving unit 830 is driven to cause the first and second display modules 822 and 824 of the display 820 to move relative to each other. In detail, the vertical driving unit 830 may move at least one display module of the first and second display modules 822 and 824 upward or move another display module downward, based on a driving signal transmitted from the processor 850. Additionally, the vertical driving unit 830 may be driven such that, when the first display module 822 (or the second display module 824) moves upward (downward), the second display module (or the first display module 822) moves downward (upward) together.

As another example, the vertical driving unit 830 may be driven such that, during driving of the display 820, in a state when a position of one display module of the first and second display modules 822 and 824 is fixed, another display module moves upward or downward by a predetermined distance. As another example, the vertical driving unit 830 may include first and second drive modules configured to vertically move the first and second display modules 822 and 824, respectively.

The input part 850 may include an input element configured to receive an input for operation of the vehicle display device 800, e.g., a microphone for voice commands, a camera for gesture commands, and other mechanical input elements. Each display module of the display 820 is implemented to be layered with a touch sensor to receive a command through a touch input.

The sensor 860 may include a camera sensor configured to monitor a state of a passenger in addition to the touch sensor included in the display 820.

The sensor 860 may detect vertical movement of at least one display module of the first and second display modules 822 and 824 of the display 820 and a degree of the movement, and transmit, to the processor 850, information related thereto. The sensor 860 may detect a change in a position of at least one display module of the first and second display modules 822 and 824 and transmit the detected change to the processor 850. The processor 850 may determine a display mode of the display 820 based on the detected position change of the display 820.

The processor 850 controls overall operations of the display 820 and the vertical driving unit 830. The processor 850 may be electrically coupled to the vehicle 100, the display 820, and the vertical driving unit 830. For example, the processor 850 may control on/off operation of the first and second display modules 822 and 842.

The processor 850 may determine a display mode of the display 820 based on information regarding a vehicle state and a traveling state each received through the communication unit 810. The processor 850 may control the vertical driving unit 830 to cause at least one display module of the first and second display modules 822 and 824 to moves upward or downward according to the determined display mode.

The processor 850 may determine a display mode of the display 820 based on a type of content displayed/to be displayed on the display 820. Then, the processor 850 may control the vertical driving unit 830 to cause at least one display module of the first and second display modules 822 and 824 to move upward or downward according to the determined display mode, and then, control the display 820 to display content.

Meanwhile, in an embodiment, the first display module 822 of the display 820 may be an organic light-emitting diode (OLED) display, and the second display module 824 may be a transparent organic light-emitting diode (TOLED) display.

At this time, the transparent organic light-emitting diode (TOLED) display may be configured as a TOLED panel capable of controlling transparency. In addition, for example, a suspended particle devices (SPD) film, a polymer dispersed liquid crystal (PDLC) film, or the like may be deposited on a rear surface of the TOLED display as a transparency control medium to control the transparency.

In an embodiment, the processor 850 may adjust operation of the vertical driving unit 830 to cause a degree of movement of at least one of the first and second display modules 822 and 824 to vary depending on a selected display mode, and a current display mode and a relative position with respect to the display 820.

In an embodiment, the vertical driving unit 830 of the vehicle display device 800 may include a first drive module configured to move the first display module 822 vertically, and a second drive module configured to move the second display module 824 vertically. Based on a drive signal of the processor 850, for example, the first drive module may move the first display module 822 upward or downward, and the second drive module may move the second display module 824 upward or downward.

In an embodiment, when the vertical driving unit 830 is implemented to include a plurality of drive modules, the processor 850 of the vehicle display device 800 may drive either or both of the first and second drive modules based on a selected display mode to vary a degree of movement of the first and second display modules 822 and 824, thereby controlling different display modes to be executed.

The processor 850 of the vehicle display device 800 according to an embodiment of this disclosure may control the display 820 to operate in a different display mode depending on a degree of overlapping due to movement of the first and second display modules 822 and 824.

A display mode of the display 820 according to a degree of overlapping between the plurality of display modules 82 and 824 may be classified into a full overlay mode, a partial overlay mode, and a separation mode.

Additionally, a display mode according to a degree of overlapping in the display 820 may be selected as one from among a mode for 3D content, a mode for augmented reality (AR) graphics, an OLED full extension display mode, and a TOLED full extension display mode, depending on a method of displaying content.

FIG. 3 is a diagram illustrating an example in which the vehicle display device 800 according to this disclosure is installed in front seats of a vehicle to operate.

As illustrated in FIG. 3, the vehicle display device 800 may be implemented as a display 820 separate from the HUD or located in front of windows of front seats of the vehicle 100. Additionally, the vehicle display device 800 may be configured such that large display modules installed longitudinally across both a driver's seat and a passenger seat, e.g., an organic light-emitting diode (OLED) display 822 and a transparent organic light-emitting diode (TOLED) display 824 are arranged to overlap each other forward and backward.

In FIG. 3, the TOLED display 824 is arranged above and the OLED display 822 is arranged below with respect to a support frame 801 located at a center, but this is just one example. Content is displayed in a form of an augmented reality (AR) graphic on a transparent OLED, i.e., the TOLED display 824. Also, with respect to the OLED display 822, content is displayed on an OLED screen. Accordingly, the AR graphic is displayed on an upper side to overlap a real image of a region in front of the vehicle, and the OLED screen is displayed on a lower side.

The TOLED display 824 and the OLED display 822 may be driven separately. In detail, the processor 850 may independently control on/off operation of the TOLED display 824 and on/off operation of the OLED display 822.

In FIG. 3, based on a control signal from the processor 850, the TOLED display 824 may move downward or the OLED display 822 may move upward. Alternatively, the TOLED display 824 and the OLED display 822 may vertically move simultaneously.

A display mode operates to display 3D content in a region in which the OLED display 822 and the TOLED display 824 overlap each other. Meanwhile, in a non-overlapping region of the TOLED display 824, since a graphic is displayed on a transparent display, a display mode operates to display the AR graphic on the real image of the region in front. Also, in the non-overlapping region of the OLED display 822, a graphic is displayed in a normal screen mode.

The display 820 is driven in one of the plurality of display modes described above depending on whether a display module positioned above overlaps or a display module that does not overlap is positioned, with reference to the support frame 801 located at a center to separate upper and lower portions of the OLED display 822 and the TOLED display 824.

For example, to operate in different display modes depending on a traveling mode of the vehicle 100, at least one display from among the OLED display 822 and the TOLED display 824 may move vertically.

Additionally, for example, to maintain a current (or change-requested) display mode or to restore an initial setting display mode depending on a traveling state of the vehicle 100, at least one from among the OLED display 822 and the TOLED display 824 may move vertically.

Thus, the OLED display 822 and the TOLED display 824 may be positioned such that one is located in front of another with a predetermined gap therebetween, and move to overlap each other or not to overlap each other according to operation of the vertical driving unit 830.

For example, as the vertical driving unit 830 is driven to cause the TOLED display 824 to move upward, the OLED display 822 and the TOLED display 824 may operate as different screens in upper and lower positions, respectively, without overlapping.

In addition, for example, as the vertical driving unit 830 operate to cause the OLED display 822 to move upward and/or the TOLED display 824 to move downward, the OLED display 822 and the TOLED display 824 may overlap each other to display 3D content.

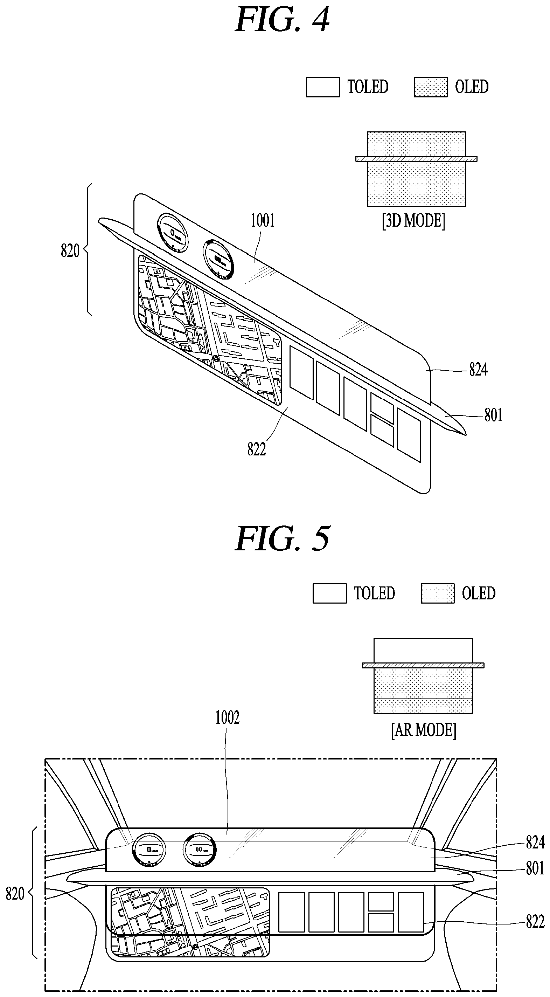

FIGS. 4 to 7 are diagrams for explaining various examples of performing different display modes in accordance with vertical movements of the plurality of display modules 822 and 824, according to this disclosure.

The processor 850 of the vehicle display device 800 according to an embodiment of this disclosure may control the display 820 to execute different display modes, according to a degree of overlapping between the first and second display modules 822 and 824 in correspondence with a position change according to relative movement of the first and second display modules 822 and 824.

For this purpose, the processor 850 may control operation of the vertical driving unit 830 interoperating with the first and second display modules 822 and 824.

Although not illustrated, the vertical driving unit 830 may be arranged in an inner space of the support frame 801 located at a center. The vertical driving unit 830 may include a motor configured to provide driving force to move each or both of the first and second display modules 822 and 824 upward (downward) or downward (upward) according to a drive signal of the processor 850, a guide part configured to guide movement of the first and second display modules 822 and 824, a rack and pinion gear module arranged to match a rotation axis of the motor and the guide part, and a cable carrier configured to interoperate with each display module.

Meanwhile, as illustrated in FIGS. 4 to 7, the display 820 of the vehicle display device 800 may be implemented such that edges of the plurality of display modules are bezel-less. Accordingly, components constituting the vertical driving unit 830 described above may be structured to be included in the inner space of the support frame 801 located at a center.

The processor 850 may operate the vertical driving unit 830 to change the display 820 to the display mode for displaying 3D content, and may move the first and second display modules 822 and 824 to overlap each other in a vertical direction according to operation of the vertical driving unit 830.

FIG. 4 illustrates an example in which the display mode for displaying 3D content is executed by moving and arranging the first and second display modules 822 and 824 to completely overlap each other.

For this purpose, the vertical driving unit 830 may move one display module among the first and second display modules 822 and 824 to face upward and move another display module to face downward. Alternatively, in a state when one display module of the first and second display modules 822 and 824 is fixed, the vertical driving unit 830 may move another display module upward or downward to overlap the one display module.

Here, the meaning that the first and second display modules 822 and 824 completely overlap each other may indicate that one display module from among the first and second display modules 822 and 824 is moved and arranged to completely overlap another display module.

Alternatively, the meaning that the first and second display modules 822 and 824 completely overlap each other may indicate that a graphic is displayed only in a region in which the first and second display modules 822 and 824 overlap each other and the displayed graphic is 3D content.

The processor 850 of the vehicle display device 800 may control the display mode for displaying 3D content to be executed, based on the arrangement of the first and second display modules 822 and 824 to fully overlap each other according to operation of the vertical driving unit 830.

In an embodiment, in the display mode for displaying 3D content, a depth of the 3D content displayed on a display may vary based on a distance between the first and second display modules 822 and 824.

For example, when the first and second display modules 822 and 824 are arranged such that a front-rear distance between overlapping portions thereof is great, a depth value of the 3D content to be displayed may be increased. Accordingly, a sense of depth of the 3D content increases. On the other hand, when the first and second display modules 822 and 824 are arranged such that a front-rear distance between overlapping portion thereof is small, a depth value of the 3D content to be displayed is decreased. Accordingly, a sense of depth in the 3D content is reduced.

FIG. 5 illustrates an example in which the first and second display modules 822 and 824 are arranged to be partially overlapped and partially non-overlapped and the TOLED display is moved and arranged to be located above to execute the display mode for displaying AR graphics.

In an embodiment, the processor 850 of the vehicle display device 800 may execute the display mode for displaying AR graphics based on arrangement of the first and second display modules 822 and 824 to partially overlap each other according to operation of the vertical driving unit 830.

Referring to FIG. 5, the TOLED display 824 may be moved and arranged to be located above, and in a state when the OLED display 822 and the TOLED display 824 overlap each other below the support frame 801, a display mode in which an AR graphic is displayed on the TOLED display 824 facing upward may be operated.

In the display mode for displaying AR graphics, transparency of a panel of the TOLED display 824 may be adjusted. In addition, arrangement of a layout capable of avoiding sunlight may be performed.

In detail, by utilizing an upper space and a lower idle space with reference to the support frame 801 at the center, optical paths may be overlapped, and a layout may be configured to avoid sunlight by providing degrees of freedom to angles and positions with respect to optical components. The optical paths may be defined as to be described hereinafter. Light having passed through OLED transparent glass is transmitted through a selective transmission/reflection film. Then, the light passes through a phase retarder (a quarter-wave plate (QWP)) to be reflected onto a mirror 2. At this time, the phase retarder (QWP) is combined with a front surface of the mirror 2 to cause retardation of polarized light incident from the OLED display twice. The polarized light having passed through the phase retarder (QWP) is reflected through a selectively transmissive reflective film to be reflected through a mirror 3.

In an embodiment, in the display mode for displaying AR graphics, the processor 850 of the vehicle display device 800 may execute a same application in a first region in which the first and second display modules 822 and 824 overlap each other and a second region in which the first and second display modules 822 and 824 do not overlap each other.

At this time, different information is displayed in the first and second regions, respectively.

In an embodiment, the processor 850 of the vehicle display device 800 may control the display 820 such that, in a state when one display module from among the first and second display modules 822 and 824 is fixed, an AR graphic is displayed in a region of another display module that has moved upward/downward according to operation of the vertical driving part 830.

In FIG. 5, when the TOLED display 824 moves slightly to an upper region while the OLED display 822 is fixed, or when the OLED display 822 moves while the TOLED display 824 is fixed, an AR graphic is displayed on the upper region to which the movement has been performed. When the TOLED moves slightly to a lower region, the AR graphic is displayed in the lower region to which the TOLED has moved.

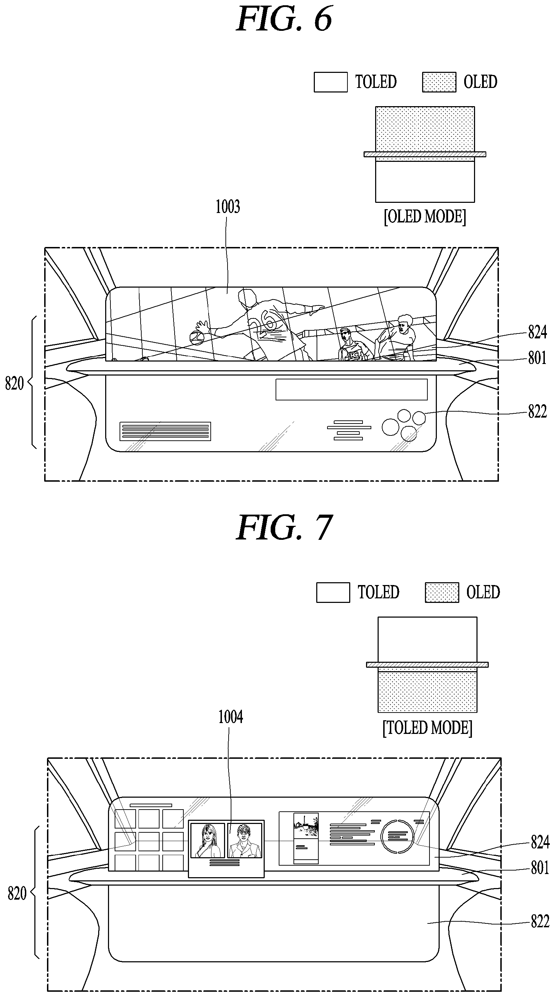

FIGS. 6 and 7 illustrate examples in which the first and second display modules 822 and 824 are moved and arranged not to overlap in any part to be used as an OLED full extension screen or a TOLED full extension screen.

The processor 850 of the vehicle display device 800 according to an embodiment of this disclosure may control the vertical driving unit 830 to move at least one display module from among the first and second display modules 822 and 824 upward or another display module downward to prevent overlapping therebetween to thereby execute a full extension display mode.

At this time, the full extension display mode refers to either an OLED display mode or a TOLED display mode.

For example, when the OLED display 822 is a display module located above the support frame 801 at a center of the vehicle display device 800, the full extension display mode is the OLED display mode or the OLED full extension display mode. Alternatively, when the TOLED display 824 is a display module located above the support frame 801, the full extension display mode is the TOLED display mode or the TOLED full extension display mode.

Referring to FIG. 6, it may be understood that a display mode is executed to have the OLED display module 822 arranged above in full screen and the TOLED display module 824 arranged below in full screen with respect to the frame 801 at the center.

For example, when an entertainment function (e.g., movie) for passengers is being executed, the vertical driving unit 830 may be driven to cause the OLED display module 822 to be located above and the TOLED display module 824 to be located below to execute the OLED full extension display mode.

At this time, a lower end of the OLED display module 822 and an upper end of the TOLED display module 824 may be each fixed by a fixing element equipped into an inner space of the support frame 801. Additionally, while an execution screen 1003 of an application corresponding to a requested entertainment function is displayed on the OLED display module 822, an execution screen of another application may be displayed on the TOLED display module 824.

As another example, referring to FIG. 7, it may be understood that a display mode is executed such that the TOLED display module 824 is arranged above in full screen and the OLED display module 822 is arranged below in full screen with respect to the frame 801 at the center.

For example, when a passenger connects a terminal/computer of the passenger to use the vehicle 100 as an office (off), the vertical driving unit 830 may be driven to cause the TOLED display module 824 to be located above and the OLED display module 822 to be located below to execute the TOLED full extension display mode.

At this time, a lower end of the TOLED display module 824 and an upper end of the OLED display module 822 may each be fixed by a fixing element equipped in an inner space of the support frame 801. In addition, while an execution screen 1004 of an application corresponding to a requested office function is displayed on the TOLED display module 824, an execution screen of another application may be displayed on the TOLED display module 824.

Meanwhile, although not illustrated, in an embodiment, the processor 850 of the vehicle display device 800 may determine whether a plurality of different display modes may vary depending on attributes of content to be displayed on the display 820.

For example, when attributes of AR content are included, it may be determined that the display mode for displaying AR content or the TOLED full extension display mode is to be displayed. In addition, for example, attributes of 3D content are included, it may be determined that the display mode for displaying 3D content is to be executed.

Then, according to the determination, the processor 850 controls operation of the vertical driving unit 830 to move at least one of the first and second display modules 822 and 824 upward or downward.

For example, when it is determined that the display mode for displaying AR content or the TOLED full extension display mode is to be executed in the example described above, the vertical driving unit 830 may move the TOLED display 824 upward. At this time, when the OLED display 822 is arranged above the support frame 801, the vertical driving unit 830 may drive the OLED display 822 to move downward.

Additionally, for example, when it is determined that the display mode for displaying 3D content is to be executed in the example described above, the vertical driving unit 830 may adjust upward or downward movement of the TOLED display 824 and the OLED display 822 so that the TOLED display 824 and the OLED display 822 completely overlap each other to have each upper portion located above the support frame 801 and each lower portion located below the support frame 801.

At this time, the processor 850 may determine a movement direction and a movement degree according to the determined display mode, based on current positions of the TOLED display 824 and the OLED display 822, and transmit the determined movement direction and the determined movement degree to the vertical driving unit 830.

Additionally, the processor 850 may control the display 820 to adjust an aspect ratio between the TOLED display 824 and/or the OLED display 822 based on attributes of content to be displayed in a determined display mode.

As described above, according to the vehicle display device 800 in accordance with an embodiment of this disclosure, various display modes may be executed in a limited space without screen division by vertically moving a plurality of display modules to execute an appropriate display mode according to attributes of content.

Meanwhile, the vehicle display device 800 according to an embodiment of this disclosure receives, through the communication unit 810, traveling state information of the vehicle 100 interoperating therewith. Then, the processor 850 may determine one of a plurality of different display modes of the display 820 based on the received traveling state information and, according to the determination, control operation of the vertical driving unit 830 to move at least one of the first and second display modules 822 and 824 upward or downward.

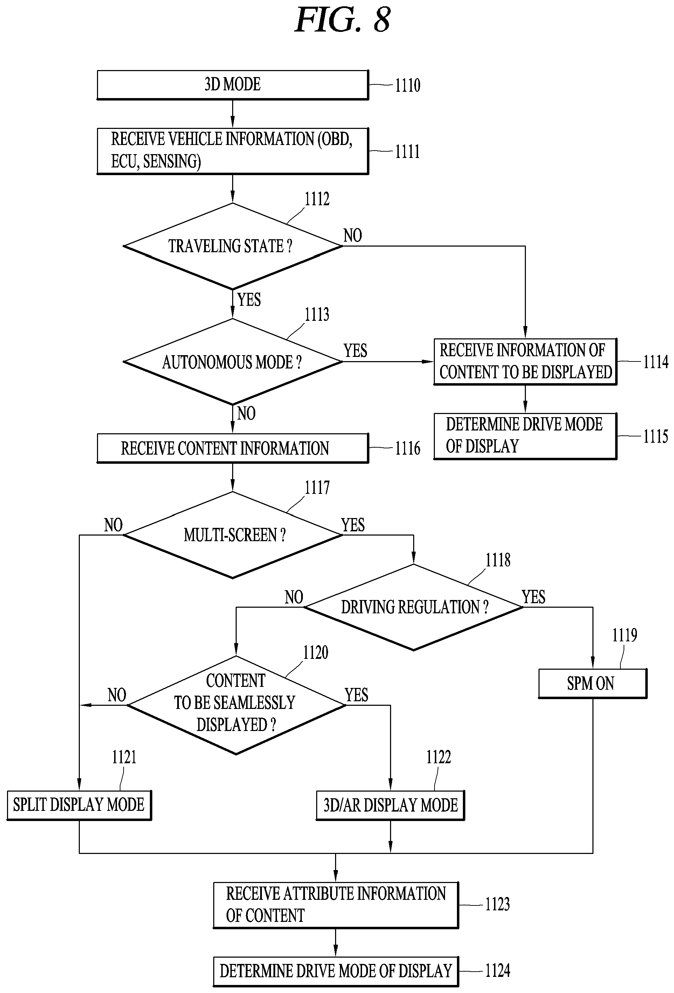

Hereinafter, FIG. 8 is an example flowchart related to a method of operations of the vehicle display device according to an embodiment of this disclosure. Each operation shown in FIG. 8 may be performed by a processor of the vehicle display device 800 unless otherwise explained.

Referring to FIG. 8, when the display 820 is driven, the vehicle display device 800 executes the display mode for displaying 3D content as an initial basic mode (1110). That is, a state in which the OLED display 822 and the TOLED display 824 are arranged to overlap each other is executed as a basic mode.

During the driving of the display 820, when the OLED display 822 and the TOLED display 824 are not in an overlapping state, the OLED display 822 and the TOLED display 824 are moved to be arranged in an overlapping state through the vertical driving unit 830.

Then, the vehicle display device 800 receives vehicle information, e.g., information regarding on-board diagnostics (OBD) and an engine control unit (ECU), and other sensing information from the vehicle 100 (1111).

The vehicle display device 800 determines whether the vehicle 100 is in a traveling state based on the received vehicle information (1112).

When the vehicle is a stopped or stationary state, since there is no restriction caused by traveling of the vehicle, information regarding content to be displayed is received (1114). For example, information regarding whether the content to be displayed is relevant to vehicle information, or content displayed on an interoperating passenger terminal, or content corresponding to an entertainment function of the vehicle may be received.

The vehicle display device 800 determines a drive mode of the display 820 based on the received information regarding the content (1115), and in accordance with this, operates the vertical driving unit 830 to display the content on the OLED display 822 and the TOLED display 824 each having been moved and arranged according to the determined drive mode.

Meanwhile, when the vehicle is in a traveling state in operation 1112, it is determined whether a traveling mode of the vehicle is an autonomous mode (1113). In a case of a manual mode, operation 1114 is performed to perform a process of receiving information regarding content to be displayed on the display 820 and determining a drive mode of the display 820 determined based on the information.

Meanwhile, when the drive mode of the vehicle is an autonomous mode, the information regarding the content to be displayed on the display 820 is received (1116), and then, based on the received information regarding the content, it is determined whether a multi-screen is needed (1117).

When a multi-screen is not needed, a split display mode is executed (1121). The split display mode is a display mode in which received content may only need to be displayed only on the OLED display 822 or the TOLED display 824. That is, this indicates that the OLED display 822 and the TOLED display 824 do not need to overlap each other to display the content.

In a case when a multi-screen is requested, it is determined, then, whether driving regulation on the vehicle is needed (1118). When a driving regulation is needed, a switchable privacy mode (SPM) is turned on, on a display in a position corresponding to a passenger seat (1119). The switchable privacy mode (SPM) refers to a display mode configured to operate to prevent a screen corresponding to a passenger seat from being visible to a driver's seat to assist safe driving.

On the other hand, when a driving regulation is not needed in operation 1118, it is determined whether the content is to be displayed seamlessly (1120). At this time, the content to be seamlessly displayed refers to content that is seamlessly displayed in both overlapped and non-overlapped regions after the display 820 is driven to display the content by overlapping at least portions of the OLED display 822 and the TOLED display 824.

When the content is to be displayed seamlessly, it is determined that a 3D/AR display mode is to be executed (1122). This means that the OLED display 822 and/or the TOLED display 824 are to move vertically.

Meanwhile, when the content does not need to be displayed seamlessly, it is determined that the split display mode is to be executed (1121). This means that the OLED display 822 and/or the TOLED display 824 do neither need to move vertically nor need to overlap each other.

As such, when it is determined whether the display 820 is to operate in the split display mode (1121), or in the 3D/AR display mode (1122), or in the SPM mode (1119), attribute information of the content is received (1113).

Here, for example, as the attribute information of the content, information regarding whether an attribute of the content to be displayed is relevant to AR content, or 3D content, or movie content is received.

Then, a drive mode of a display to be operated is determined based on the received attribute information of the content (1124). For example, when 3D content is included as the attribute information of the content, the vertical driving unit 830 may be operated to cause the OLED display 822 and the TOLED display 824 to overlap each other. In addition, for example, when AR content is included as attribute information of the content, the vertical driving unit 830 may operate so that the TOLED display 824 is arranged above and the OLED display 822 is arranged to overlap only below the support frame 801 at a center.

Meanwhile, the vehicle display device 800 may determine different aspect ratios when a plurality of display modes are executed, based on whether the vehicle is traveling, a traveling mode of the vehicle, and a function executed during the traveling. In addition, a size of a display area to which a selected display mode is applied may be varied by varying a degree of overlapping between the OLED display 822 and the TOLED display 824.

To display 3D content through a plurality of display modules arranged to move relative to each other, the display 820 of the vehicle display device 800 includes a picture generating unit (PGU) configured to emit linear polarized light in a first direction, and a polarizing mirror including a transmission region through which first linear polarized light is transmitted and a polarization reflection region that reflects second linear polarized light in a second direction orthogonal to the first direction. In addition, the display 820 includes a phase retardation mirror spaced apart from the polarizing mirror and configured to phase-convert the first linear polarized light having transmitted through the transmission region of the polarizing mirror into the second linear polarized light. Thus, the second linear polarized light emitted from the phase retardation mirror is reflected through a concave mirror by a polarized reflection region of the polarizing mirror, and the concave mirror is configured such that an optical path is set to reflect the second linear polarized light onto a windshield of the vehicle. In this case, the polarizing mirror is laminated with a film configured to selectively transmit/reflect linear polarized light to transmit/reflect an image source according to a polarization direction.

In addition, as a quarter wave transformer (QWT) is laminated on a front surface of the phase retardation mirror, polarized light incident from the display 820 may be retarded twice. In another embodiment, the QWT may be laminated on a polarized reflection mirror.

In addition, the laminated film may be a polymer dispersed liquid crystal (PDLC) film. The PDLC film is similar to SPD films, and polymer dispersed liquid crystal (PDLC) films may be used as a transparency control medium. The PDLC films may have a general maximum transmittance of about 80 to 90%.

As described above, according to the vehicle display device in accordance with an embodiment of this disclosure and a method of operating the same, various different display modes may be executed within a limited space by implementing a plurality of display modules of different types to be movable relative to each other. In addition, an appropriate display mode may be selectively executed depending on a driving state of the vehicle or a type of content to be displayed. Accordingly, diverse visual experiences may be provided to users.

This disclosure may be implemented as computer-readable codes on a medium having a program recorded thereon. The computer readable medium includes all kinds of recording devices in which data readable by a computer system is stored. Examples of the computer-readable medium include a hard disk drive (HDD), a solid state disk (SSD), a silicon disk drive (SDD), a ROM, a RAM, a CD-ROM, a magnetic tape, a floppy disk, an optical data storage device and the like, and may also be implemented in the form of a carrier wave (e.g., transmission over the Internet). A computer may also include a processor of the vehicle display device 800. Therefore, the detailed description should not be limitedly construed in all of the aspects, and should be understood to be illustrative. The scope of this disclosure should be determined by reasonable interpretation of the appended claims, and all changes within the scope of equivalents of this disclosure are included in the scope of this disclosure.

## Claims

1. A vehicle display device comprising:
a display unit comprising a first display module and a second display module of different types, wherein one display module from among the first and second display modules is positioned in front of another display module to be arranged to overlap each other;
a vertical driving unit configured to vertically move at least one display module from among the first and second display modules; and
a processor electrically coupled to the display unit and the vertical driving unit to control driving of the first and second display modules and an operation of the vertical driving unit,
wherein the processor controls the display unit to operate in one of a plurality of different display modes based on position change corresponding to movement of at least one display module from among the first and second display modules according to the operation of the vertical driving unit.

2. The vehicle display device of claim 1, wherein the first display module is an organic light-emitting diode (OLED) display and the second display module is a transparent organic light-emitting diode (TOLED) display.

3. The vehicle display device of claim 2, wherein the processor controls the operation of the vertical driving unit to vary a degree of movement of at least one display module from among the first and second display modules is changed based on a selected display mode.

4. The vehicle display device of claim 3, wherein the vertical driving unit comprises a first drive module configured to vertically move the first display module and a second drive module configured to vertically move the second display module, and
the processor varies a degree of movement of the first and second display modules by driving either or both of the first and second drive modules, based on the selected display mode.

5. The vehicle display device of claim 1, wherein the processor controls the display unit to execute different display modes depending on a degree of overlapping between the first and second display modules in correspondence with the position change.

6. The vehicle display device of claim 5, wherein the processor controls a display mode for displaying three-dimensional (3D) content to be executed based on arrangement of the first and second display modules to fully overlap each other according to the operation of the vertical driving unit.

7. The vehicle display device of claim 6, wherein, in the display mode for displaying the 3D content, a depth of the 3D content varies depending on a distance between the first and second display modules.

8. The vehicle display device of claim 5, wherein the processor controls a display mode for displaying an augmented reality (AR) graphic to be executed based on arrangement of the first and second display modules such that portions of the first and second display modules overlap each other according to the operation of the vertical driving unit.

9. The vehicle display device of claim 8, wherein the processor is configured to
execute, in the display mode for displaying the AR graphic, a same application in a first region in which the first and second display modules overlap each other and a second region in which the first and second display modules do not overlap each other, and
control the display to display different information in the first region and the second region, respectively.

10. The vehicle display device of claim 9, wherein, in a state when one display module from among the first and second display modules is fixed, the processor controls the display to display the AR graphic is displayed on a region of another display module that has vertically moved according to the operation of the vertical driving unit.

11. The vehicle display device of claim 5, wherein the processor controls a full extension display mode to be executed by causing the vertical driving unit to move at least one display module from among the first and second display modules upward or move another display module downward to prevent the first and second display modules from overlapping each other, and
the full extension display mode is either an organic light-emitting diode (OLED) display mode or a transparent organic light-emitting diode (TOLED) display.

12. The vehicle display device of claim 1, further comprising a communication module configured to receive traveling state information of a vehicle,
wherein the processor determines one of the plurality of different display modes based on the received traveling state information, and according to the determination, controls the operation of the vertical driving unit to move at least one display module from among the first and second display modules upward or downward.

13. The vehicle display device of claim 1, wherein the processor determines whether the plurality of different display modes vary depending on an attribute of content to be displayed on the display unit and, according to the determination, and controls the operation of the vertical driving unit to move at least one display module from among the first and second display modules upward or downward.
